(19) Europäisches Patentamt
European Patent Office
Office européen des brevets

(11) Veröffentlichungsnummer : **0 088 322**
**B1**

(12) **EUROPÄISCHE PATENTSCHRIFT**

(45) Veröffentlichungstag der Patentschrift : **08.07.87**

(21) Anmeldenummer : **83101928.6**

(22) Anmeldetag : **28.02.83**

(51) Int. Cl.[4] : **C 08 G 63/24**, C 08 G 63/18, C 08 G 63/40, C 08 G 63/66, C 08 G 63/68

(54) **Hochmolekulare aromatische Polyester, Verfahren zu ihrer Herstellung und ihre Verwendung zur Herstellung von Formkörpern.**

(30) Priorität : **09.03.82 DE 3208332**

(43) Veröffentlichungstag der Anmeldung : **14.09.83 Patentblatt 83/37**

(45) Bekanntmachung des Hinweises auf die Patenterteilung : **08.07.87 Patentblatt 87/28**

(84) Benannte Vertragsstaaten : **DE FR GB IT NL**

(56) Entgegenhaltungen :
**AT-B- 247 001**
**AT-B- 284 451**
**FR-A- 1 177 517**
**SU-A- 133 222**

(73) Patentinhaber : **BAYER AG**
**Konzernverwaltung RP Patentabteilung**
**D-5090 Leverkusen 1 Bayerwerk (DE)**

(72) Erfinder : **Freitag, Dieter, Dr.**
**Hasenheide 10**
**D-4150 Krefeld 1 (DE)**
Erfinder : **Hucks, Uwe**
**Am Marienstift 30**
**D-4234 Alpen (DE)**
Erfinder : **Meissner, Hans-Jürgen, Dr.**
**Bunsenstrasse 21**
**D-4150 Krefeld (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 088 322 B1

Jouve, 18, rue St-Denis, 75001 Paris, France

**Beschreibung**

Die Erfindung betrifft aromatische Polyester mit hohem Molekulargewicht auf Basis von Iso- und/oder Terephthalsäure und Diphenolen, ein Phasengrenzflächenverfahren zu ihrer Herstellung in Gegenwart bestimmter tertiärer Amine bei definiertem Alkaliüberschuß und die Verwendung dieser Polyester zur Herstellung von Formkörpern, vornehmlich durch Spritzguß.

Aromatische Polyester sind bekannt (W. M. Eareckson, J. Polym. Sci. XL, 399-406 (1959) ; André Conix, « Thermoplastic Polyesters from Bisphenols », Ind. Eng. Chem., Vol. 51, Nr. 2, 147-150, Febr. 1959 ; FR 1 177 517, US 3 351 624, DE-AS 1 445 384). Sie werden wegen ihrer ausgezeichneten Eigenschaften überall dort eingesetzt, wo hohe Wärmeformbeständigkeit und gute Schlag-bzw. Kerbschlagzähigkeit erwünscht sind.

Die aromatischen Polyester können besonders vorteilhaft nach dem Phasengrenzflächenverfahren aus den aromatischen Dicarbonsäuredichloriden und den Alkalidiphenolaten hergestellt werden. Diese Arbeitsweise ist in der oben aufgeführten Literatur ausführlich beschrieben.

Voraussetzung für den Einsatz aromatischer Polyester als Werkstoffe ist ein hinreichend hohes Molekulargewicht. In der Literatur wird für das Erreichen dieses Ziels die Verwendung tertiärer Amine und quaternärer Ammoniumsalze empfohlen.

Die FR-PS 1 177 517 betrifft ein Verfahren zur Herstellung aromatischer Polyester, wobei tertiäre Amine als Säurefänger eingesetzt werden können. Die namentlich genannten Amine enthalten keine in einen Cycloaliphaten eingebauten Stickstoffatome. Von einem Alkaliüberschuß wird in der FR-PS 1 177 517 nichts gesagt.

Die AT-PS 284 451 betrifft ebenfalls ein Verfahren zur Herstellung aromatischer Polyester, wobei tertiäre Amine in katalytischen Mengen eingesetzt werden. Auf Seite 2 werden unter vielen anderen auch solche Katalysatoren aufgezählt, die unter die Amindefinition unserer Ansprüche fallen. Keines der 33 Beispiele beschreibt die Herstellung eines voll-aromatischen Polyesters in Gegenwart eines Amin-Katalysators, der unter die Definition unserer Ansprüche fiele. Die AT-PS 284 451 betrifft darüber hinaus kein Phasengrenzflächenverfahren und verwendet kein Alkalihydroxid, so daß diese Patentschrift keine Anleitung zur Lösung der erfindungsgemäßen Aufgabe bieten konnte.

Weiterhin ist für viele Anwendungen erwünscht, daß die aromatischen Polyester möglichst farblos sind.

Überraschenderweise wurde nun gefunden, daß man aromatische Polyester mit besonders hohem Molekulargewicht und sehr geringer Eigenfärbung nach dem Phasengrenzflächenverfahren erhalten kann, wenn man als Katalysatoren tertiäre cycloaliphatische Amine einsetzt und mit einem geringen Alkaliüberschuß arbeitet.

Die derart hergestellten Polyester weisen außerdem einen niedrigen Carboxylgruppengehalt und einen niedrigen Gehalt an verseifbarem Chlor auf.

Gegenstand der Erfindung ist ein Phasengrenzflächenverfahren zur Herstellung aromatischer Polyester aus Iso- und/oder Terephthalsäuredichloriden, Diphenolen, Kettenabbrechern und gegebenenfalls Verzweigungsmitteln in Gegenwart von Alkalihydroxid und 0,2 bis 3,0, vorzugsweise 0,5 bis 1,5, Gew.-%, bezogen auf eingesetzte aromatische Dicarbonsäuredichloride, tertiärem Amin, dadurch gekennzeichnet, daß mit einem Überschuß von 0,3 bis 1,8, vorzugsweise 0,5 bis 1,1, Mol-% Alkalihydroxid, bezogen auf phenolisches Hydroxyl, gearbeitet wird und das tertiäre Amin 1 bis 4, vorzugsweise 1 bis 2, in einen 4- bis 7-gliedrigen Cycloaliphaten eingebaute Heteroatome enthält, von denen mindestens eines ein tertiäres Stickstoffatom ist.

Neben Stickstoffatomen können als Heteroatome z. B. Sauerstoff- und/oder Schwefelatome auftreten. Die cycloaliphatischen tertiären Amine können mit 1 bis 2 $C_5$-$C_8$-Cycloaliphaten oder -Aromaten kondensiert sein. In diesen Fällen können tertiäre Stickstoffatome auch als Brückenkopfatome fungieren.

Bevorzugte tertiäre Amine im Sinne der Erfindung sind z. B. N-$C_1$-$C_6$-Alkyl-pyrrolidine, -piperidine, -morpholine, -dihydroindole, -dihydroisoindole, -tetrahydrochinoline, -tetrahydroisochinoline, -benzomorpholine, 1-Azabicyclo- [3.3.0]-octan, Chinuclidin, N-$C_1$-$C_6$-Alkyl-2-azabicyclo-[2.2.1]-octan, N-$C_1$-$C_6$-Alkyl-2-azabicyclo-[3.3.1]-nonan, N-$C_1$-$C_6$-Alkyl-3-azabicyclo-[3.3.1]-nonan.

Besonders bevorzugt sind N-Ethylpyrrolidin, N-Ethylpiperidin, N-Ethylmorpholin, N-Isopropylpiperidin, N-Isopropylmorpholin.

Als Alkalihydroxid kommen Kaliumhydroxid und insbesondere Natriumhydroxid in Frage. Der Überschuß bezieht sich auf sämtliche phenolische hydroxylgruppen einschließlich evtl. eingesetzter phenolischer Kettenabbrecher und Verzweigungsmittel.

Das erfindungsgemäße Verfahren kann kontinuierlich und diskontinuierlich durchgeführt werden.

Weiterer Gegenstand der Erfindung sind aromatische Polyester enthaltend Iso- und/oder Terephthalsäurereste, Diphenolreste, Reste von Kettenabbrechern und gegebenenfalls von Verzweigungsmitteln, dadurch gekennzeichnet, daß sie eine relative Viskosität von mehr als 1,25, vorzugsweise von mehr als 1,275 (gemessen an einer Lösung von 0,5 g Polyester in 100 ml Dichlormethan-Lösung bei (25 °C), einen Gehalt freier Carboxylgruppen von weniger als 0,25, vorzugsweise von weniger als 0,20, Gew.-%, einen Gehalt an verseifbarem Chlor von weniger als 30 ppm, vorzugsweise von weniger als 10 ppm, und einem Gelbwert G (nach DIN 6167) unter 20 besitzen.

Die Mengenangaben beziehen sich auf den aromatischen Polyester.

Weiterer Gegenstand der Erfindung ist die Verwendung dieser aromatischen Polyester zur Herstellung von Formkörpern, insbesondere von Spritzgußartikeln.

Die nach dem erfindungsgemäßen Verfahren herzustellenden aromatischen Polyester besitzen in der Regel relative Viskositäten von 1,18 bis 2,0, vorzugsweise von 1,2 bis 1,5 (gemessen an einer Lösung von 0,5 g Polyester in 100 ml Dichlormethan-Lösung bei 25 °C).

Bevorzugte Diphenole für die Herstellung der aromatischen Polyester sind Verbindungen der Formel

$$HO—Z—OH \qquad (I)$$

worin Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

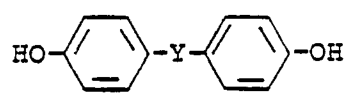

(II)

in der Y eine Einfachbindung, einen Alkylen- oder Alkylidenrest mit 1-7 C-Atomen, einen Cycloalkylen- oder Cycloalkylidenrest mit 5-12 C-Atomen, —O—, —S—,

$$-\underset{\underset{O}{\|}}{S}-,\quad -SO_2- \text{ oder } -\underset{\underset{O}{\|}}{C}-$$

bedeutet,
sowie deren kernalkylierte und kernhalogenierte Derivate, z. B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α, α'-Bis-(hydroxyphenyl)-diisopropylbenzole

sowie deren kernalkylierte und kernhalogenierte Verbindungen, insbesondere z. B. Bisphenol A = 2,2-Bis-(4-hydroxyphenyl)-propan, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenyl, 4,4'-Dihydroxydiphenylsulfon sowie deren di- und tetrahalogenierte Derivate. Besonders bevorzugt ist Bisphenol A. Es können auch beliebige Mischungen der vorgenannten Diphenole verwendet werden.

Als Kettenabbrecher für die aromatischen Polyester werden vorzugsweise Phenol, Alkylphenole mit $C_1$-$C_{18}$-Alkylgruppen, halogenierte Phenole, Hydroxydiphenyl, Naphthole, Chlorkohlensäureester solcher phenolischer Verbindungen und Chloride von aromatischen Monocarbonsäuren, die gegebenenfalls durch $C_1$-$C_{18}$-Alkylgruppen und Halogenatome substituiert sein können, in Mengen von 0,1 bis 10 Mol-% (im Falle von Phenolen und Chlorkohlensäureestern bezogen auf Diphenole, im Falle von Säurechloriden bezogen auf Säuredichloride) verwendet.

Als Verzweigungsmittel für die aromatischen Polyester lassen sich vorzugsweise 3- oder höherfunktionelle Carbonsäurechloride oder 3- und höherwertige Phenole in Mengen von 0,01 bis 1 Mol-%, bezogen auf eingesetzte Dicarbonsäurechloride bzw. auf eingesetzte Diphenole, verwenden.

Außerdem können die aromatischen Polyester bis zu 10 Mol-% Säureanhydrid-Gruppierungen (bezogen auf die Summe von Carbonsäureester-, Carbonat- und Anhydrid-Gruppierungen) enthalten.

Die erfindungsgemäß hergestellten aromatischen Polyester können natürlich Stabilisatoren, wie z. B. aliphatische und aromatische Phosphite, Fließhilfsmittel, wie z. B. niedermolekulare Carbonsäureester, Farbpigmente, wie z. B. Ruß und Titandioxid, und bis zu 60 Gew.-%, bezogen auf gefüllten aromatischen Polyester, gegebenenfalls verstärkend wirkende Füllstoffe, wie z. B. Kreidepulver, Quarzmehl, Talkum, Kohlenstoff- und Glasfasern, enthalten. Die Zusätze können während oder nach der Herstellung der Polyester bzw. während ihrer Verarbeitung in die Schmelze der Polyester eingearbeitet werden.

Die erfindungsgemäß hergestellten aromatischen Polyester können auf handelsüblichen Verarbeitungsmaschinen beispielsweise zu Formkörpern, Halbzeug und Folien verarbeitet werden, die sich durch

bemerkenswert hohe Zähigkeit und Transparenz und durch besonders geringe Eigenfärbung auszeichnen.

Die Prozentangaben der nachfolgenden Beispiele beziehen sich, sofern nicht anders angegeben, auf das Gewicht.

## Beispiele

Der Gelbwert G wurde an Polyester-Spritzgußkörpern der Abmessungen 40 × 40 × 4 mm gemäß DIN 6167 mit Lichtart D 65/10°-Beobachter bestimmt.

### Beispiel 1

4,567 kg (20,03 Mol) Bisphenol A (= BPA) wurden in einer Mischung aus 3,656 kg (41,13 Mol) 45 %iger wäßriger Natronlauge und 112 l Wasser unter Stickstoffatmosphäre gelöst. Nach Zugabe von 7 g Natriumborhydrid, 22,6 ml N-Ethylpiperidin (= 1 Mol-%, bezogen auf BPA), 20 kg Dichlormethan und 14 kg Chlorbenzol wurden unter kräftigem Rühren innerhalb von 5 Minuten 10,15 kg (20 Mol) einer 40 %igen Lösung von Iso- und Terephthalsäuredichlorid (1 :1) in Chlorbenzol und 136 g (3,3 Mol-%, bezogen auf BPA) darin gelöstes p-Isooctylphenol zugegeben und 30 Minuten nachgerührt. Zur Aufarbeitung wurden die Phasen getrennt, die organische mit Wasser elektrolytfrei gewaschen und dann eingedampft.

### Beispiele 2-9, Vergleichsbeispiele 1-4

In weiteren Untersuchungen wurden sowohl einige erfindungsgemäße Katalysatoren als auch einige Katalysatoren des Standes der Technik eingesetzt. Die Prüfergebnisse sind in der Tabelle zusammengestellt.

Die Umsetzung erfolgte jeweils analog Beispiel 1 mit 1 Mol-% Katalysator (bezogen auf BPA).

Tabelle

| Beispiel | Katalysator | relative Viskosität | Gelbwert G |
|---|---|---|---|
| 1 | N-Ethylpiperidin | 1,334 | - |
| 2 | N-Ethylmorpholin | 1,344 | 14,5 |
| 3 | N-Ethylpyrrolidin | 1,328 | 17,8 |
| 4 | Chinuclidin | 1,314 | 12,3 |
| 5 | N-Isopropyl-1-tetrahydrochinidin | 1,337 | 8,5 |
| 6 | N,N'-Diethyl-pyrazan | 1,323 | 15,2 |
| 7 | N-Methyl-pyrrolidin | 1,331 | 13,4 |
| 8 | N-Butyl-dihydro-1-indol | 1,316 | 16,7 |
| 9 | N-Ethyl-benzomorpholin | 1,339 | 9,1 |
| | Vergleichsbeispiel | | |
| 1 | Triethylamin | 1,253 | 55,1 |
| 2 | Trimethylamin | 1,248 | 63,8 |
| 3 | Tetrabutyl-ammonium-bromid | 1,277 | 47,5 |
| 4 | Trimethyl-benzyl-ammonium-chlorid | 1,285 | 53,7 |

**Patentansprüche**

1. Phasengrenzflächenverfahren zur Herstellung aromatischer Polyester aus Iso- und/oder Terephthalsäuredichloriden, Diphenolen, Kettenabbrechern und gegebenenfalls Verzweigungsmitteln in Gegenwart von Alkalihydroxid und 0,2 bis 3,0 Gew.-%, bezogen auf eingesetzte aromatische Dicarbonsäuredichloride, tertiärem Amin, dadurch gekennzeichnet, daß mit einem Überschuß von 0,3 bis 1,8 Mol-% Alkalihydroxid, bezogen auf phenolisches Hydroxyl, gearbeitet wird und das tertiäre Amin 1 bis 4 in einem 4- bis 7-gliedrigen Cycloaliphaten eingebaute Heteroatome enthält, von denen mindestens eines ein tertiäres Stickstoffatom ist.

2. Verfahren nach Anspruch 1, dadurch gekennzeichnet, daß in Gegenwart von 0,5 bis 1,5 Gew.-%, bezogen auf eingesetze aromatische Dicarbonsäuredichloride, tertiärem Amin gearbeitet wird.

3. Verfahren nach Ansprüchen 1 und 2, dadurch gekennzeichnet, daß mit einem Überschuß von 0,5 bis 1,1 Mol-% Alkalihydroxid, bezogen auf phenolisches Hydroxyl, gearbeitet wird.

4. Verfahren nach Ansprüchen 1-3, dadurch gekennzeichnet, daß das tertiäre Amin 1 bis 2 in einem 4- bis 7-gliedrigen Cycloaliphaten eingebaute Heteroatome enthält, von denen mindestens eines ein tertiäres Stickstoffatom ist.

5. Aromatische Polyester enthaltend Iso- und/oder Terephthalsäurereste, Diphenolreste, Reste von Kettenabbrechern und gegebenenfalls von Verzweigungsmitteln, dadurch gekennzeichnet, daß sie eine relative Viskosität von mehr als 1,25 (gemessen an einer Lösung von 0,5 g Polyester in 100 ml Dichlormethan-Lösung bei 25 °C), einen Gehalt freier Carboxylgruppen von weniger als 0,25 Gew.-%, einen Gehalt an verseifbarem Chlor von weniger als 30 ppm und einen Gelbwert G (nach DIN 6167) unter 20 besitzen.

6. Aromatische Polyester nach Anspruch 5, dadurch gekennzeichnet, daß sie eine relative Viskosität von mehr als 1,275 (gemessen an einer Lösung von 0,5 g Polyester in 100 ml Dichlormethanlösung bei 25 °C) besitzen.

7. Aromatische Polyester nach Ansprüchen 5 und 6, dadurch gekennzeichnet, daß weniger als 0,20 Gew.-% freier Carboxylgruppen enthalten sind.

8. Aromatische Polyester nach Ansprüchen 5-7, dadurch gekennzeichnet, daß sie weniger als 10 ppm an verseifbarem Chlor enthalten.

9. Verwendung der nach Ansprüchen 1-4 hergestellten Polyester zur Herstellung von Formkörpern, insbesondere von Spritzgußartikeln.

**Claims**

1. Phase interface process for the production of aromatic polyesters from iso- and/or terephthalic acid dichlorides, diphenols, chain terminators and optionally branching agents, in the presence of an alkali hydroxide and 0.2 to 3.0 % by weight, based on the aromatic dicarboxylic acid dichlorides used, of a tertiary amine, characterised in that the process is carried out using an excess of 0.3 to 1.8 mol % of the alkali hydroxide, based on phenolic hydroxyl, and the tertiary amine contains 1 to 4 heteroatoms incorporated in a 4- to 7- membered cycloaliphatic compound, at least one of these heteroatoms being a tertiary nitrogen atom.

2. Process according to claim 1, characterised in that it is carried out in the presence of 0.5 to 1.5 % by weight, based on the aromatic dicarboxylic acid dichlorides used, of the tertiary amine.

3. Process according to claims 1 and 2, characterised in that it is carried out using an excess of 0.5 to 1.1 mol % of the alkali hydroxide, based on phenolic hydroxyl.

4. Process according to claims 1-3, characterised in that the tertiary amine contains 1 to 2 heteroatoms incorporated in a 4- to 7- membered cycloaliphatic compound, at least one of these heteroatoms being a tertiary nitrogen atom.

5. Aromatic polyesters containing iso- and/or terephthalic acid radicals, diphenol radicals, radicals of chain-terminators and optionally of branching agents, characterised in that they have a relative viscosity of more than 1.25 (measured using a solution of 0.5 g of polyester in 100 ml of dichloromethane solution at 25 °C), they contain less than 0.25 % by weight of free carboxyl groups, less than 30 ppm of saponifiable chlorine, and they have a yellow value G (according to DIN 6167) of less than 20.

6. Aromatic polyesters according to claim 5, characterised in that they have a relative viscosity of more than 1.275 (measured using a solution of 0.5 g of polyester in 100 ml of dichloromethane solution at 25 °C).

7. Aromatic polyesters according to claims 5 and 6, characterised in that they contain less than 0.20 % by weight of free carboxyl groups.

8. Aromatic polyesters according to claims 5-7, characterised in that they contain less than 10 ppm of saponifiable chlorine.

9. Use of the polyesters produced according to claims 1-4 for the production of mouldings, in particular injection moulded articles.

**Revendications**

1. Procédé à l'interphase pour la fabrication de polyesters aromatiques à partir de dichlorures d'acide isophtalique et/ou d'acide téréphtalique, de diphénols, d'agents de coupure de chaînes et éventuellement d'agents de ramification en présence d'hydroxyde alcalin et de 0,2 à 3,0 % en poids d'une amine tertiaire, par rapport aux dichlorures d'acides dicarboxyliques aromatiques, caractérisé en ce que l'on opère avec un excès de 0,3 à 1,8 mol % d'hydroxyde alcalin, par rapport à l'hydroxyle phénolique et l'amine tertiaire contient 1 à 4 hétéroatomes incorporés dans des composés cycloaliphatiques à 4-7 chaînons, dont l'un au moins est un atome d'azote tertiaire.

2. Procédé selon la revendication 1, caractérisé en ce que l'on opère en présence de 0,5 à 1,5 % en poids d'amine tertiaire, par rapport au dichlorures d'acides dicarboxyliques aromatiques utilisés.

3. Procédé selon les revendications 1 et 2, caractérisé en ce que l'on opère avec un excès de 0,5 à 1,1 mol % d'hydroxyde alcalin, par rapport à l'hydroxyle phénolique.

4. Procédé selon les revendications 1-3, caractérisé en ce que l'amine tertiaire contient 1 à 2 hétéroatomes incorporés dans des composés cycloaliphatiques à 4-7 chaînons, dont l'un au moins est un atome d'azote tertiaire.

5. Polyesters aromatiques contenant des restes d'acide isophtalique et/ou d'acide téréphtalique, des restes de diphénols, des restes d'agents de coupure de chaînes et éventuellement d'agents de ramification, caractérisés en ce qu'ils possèdent une viscosité relative de plus de 1,25 (mesurée à 25 °C sur une solution de 0,5 g de polyester dans 100 ml de solution de dichlorométhane), une teneur en groupes carboxyles libres de moins de 0,25 % en poids, une teneur en chlore saponifiable de moins de 30 ppm et une valeur de jaune G (selon DIN 6167) de moins de 20.

6. Polyesters aromatiques selon la revendication 5, caractérisés en ce qu'ils possèdent une viscosité relative de plus de 1,275 (mesurée à 25 °C sur une solution de 0,5 g de polyester dans 100 ml de solution de dichlorométhane).

7. Polyesters aromatiques selon les revendications 5 et 6, caractérisés en ce qu'ils contiennent moins de 0,20 % en poids de groupes carboxyles libres.

8. Polyesters aromatiques selon les revendications 5-7, caractérisés en ce qu'ils contiennent moins de 10 ppm de chlore saponifiable.

9. Utilisation des polyesters fabriqués selon les revendications 1-4 pour la fabrication de pièces moulées, en particulier d'articles moulés par injection.